Europäisches Patentamt

European Patent Office

Office européen des brevets

(19)

(11) Veröffentlichungsnummer : **0 152 793**
**B1**

(12) EUROPÄISCHE PATENTSCHRIFT

(45) Veröffentlichungstag der Patentschrift :
19.07.89

(51) Int. Cl.⁴ : **C 09 D   5/12**

(21) Anmeldenummer : 85100684.1

(22) Anmeldetag : 24.01.85

(54) Haftgrundierlacke und ihre Verwendung.

(30) Priorität : 04.02.84 DE 3403879

(43) Veröffentlichungstag der Anmeldung :
28.08.85 Patentblatt 85/35

(45) Bekanntmachung des Hinweises auf die Patenterteilung : 19.07.89 Patentblatt 89/29

(84) Benannte Vertragsstaaten :
BE DE FR GB IT NL SE

(56) Entgegenhaltungen :
GB—A— 1 019 791
CHEMICAL ABSTRACTS, Band 90, Nr. 14, April 1979,
Seite 111, Nr. 105837q, Columbus, Ohio, US
PATENTS ABSTRACTS OF JAPAN, Band 5, Nr. 16 (C-
41)[688], 30. Januar 1981; & JP-A-55 142 063 (DAINIP-
PON TORYO K.K.) 06.11.1980

(73) Patentinhaber : HOECHST AKTIENGESELLSCHAFT
Postfach 80 03 20
D-6230 Frankfurt am Main 80 (DE)

(72) Erfinder : Angelmayer, Karl-Hans
Reuchlinstrasse 28
D-6200 Wiesbaden (DE)
Erfinder : Hesse, Wolfgang, Dr.
Rossbachhöhe 42
D-6204 Taunusstein (DE)

## Beschreibung

Die Erfindung bezieht sich auf Haftgrundierlacke, die den damit behandelten Metalloberflächen hervorragende Korrosionsbeständigkeiten vermitteln, die durch den Decklack nicht durchschlagen und ohne Mitverwendung von Chromat-Pigmenten hergestellt und eingesetzt werden können.

Haftgrundierlacke sollen Metallteilen, besonders solchen die im Schiffsbau oder bei der Herstellung von anderen Stahlkonstruktionen verwendet werden, zunächst einen temporären Korrosionsschutz bieten und später überlackierbar sein. Als Wash-Primer in Schichtdicken von 8-12 µm oder Shop-Primer in Schichtdicken von 8-40 µm müssen sie thermischen Beanspruchungen, wie sie beim Schweißen entstehen, so standhalten, daß sie porenfrei bleiben und sich an der Schweißnaht später keine Korrosionsstellen ausbilden. Als Decklacke werden im allgemeinen oxidativ trocknende Alkydharze verwendet.

Darüber hinaus ist es wünschenswert, Metallgegenstände, deren Deck- oder Zwischenlacke thermisch vernetzt werden, mit einer ähnlich wirkenden Haftgrundierung zu versehen, obwohl es dabei nicht auf einen temporären Korrosionsschutz ankommt, sondern die einzelnen Lackierungen zügig hintereinander durchgeführt werden. Denn diese Haftgrundierungen bewirken neben der Verbesserung der Haftung des Lackaufbaues auch einen hervorragenden Korrosionsschutz. Dem steht aber entgegen, daß die bekannten Haftgrundierlacke, die im allgemeinen zur Erzielung einer guten Wirkungsweise Phenolharze enthalten müssen, durch den Decklack schlagen und dort zu Verfärbungen Anlaß geben. Bei temporär zu schützenden Konstruktionsteilen werden bisher als Decklack langölige, benzinlösliche Alkydharze als Bindemitel verwendet, weil diese die Tendenz zum Durchschlagen verringern. Andere Decklacke, z.B. auf Basis von kurzöligen Alkydharzen, die in aromatischen Kohlenwasserstoffen und/oder Alkoholen löslich sind, oder Nitrocelluloselacke, Mischpolymere auf Basis von a) Vinylchlorid und b) Vinylisobutyläther oder Vinylacetat, eignen sich für diese Zwecke ebenso wie die anderen üblichen Lacksysteme nicht. Die Grundierung von Metallteilen, deren Lackierung später thermisch vernetzt werden soll, ist wegen des Durchschlagens der Haftgrundierung bislang unmöglich oder mit Verminderung an Korrosionsschutz verbunden, wie bei Kombinationen aus Alkyd- und Harnstoffharzen.

Die Ursache des Durchschlagens ist ohne Zweifel in der Phenolharzkomponente zu suchen. Läßt man in einem Haftgrundierlack das Phenolharz weg, so kommt es nicht zum Durchschlagen. Dann aber bieten die Haftgrundierungen keinen oder nur unzureichenden Korrosionsschutz, die Hafteigenschaften sind verschlechtert. Die Phenolharzkomponente beeinträchtigt die Vernetzungsgeschwindigkeit und den Vernetzungsgrad des beim jetzigen Stand der Technik ausschließlich verwendbaren oxidativ trocknenden Decklackes.

Die am besten wirkenden Haftgrundierlacke sind Lösemittellacke, die in der Regel Polyvinylbutyral, Phosphorsäure, Pigmente und Phenolharze enthalten. Bei der Auswahl der Pigmente (hier sollen darunter auch Füllstoffe und Extender verstanden werden) ist man bisher auf die Mitverwendung von Chromatpigmenten, besonders Zinkchromat, angewiesen. Zinkchromat vermittelt nicht nur wesentlich verbesserten Korrosionsschutz, sondern verbessert auch die Haftung auf den metallischen Oberflächen, besonders auf Aluminium und Zink. Bei diesen Oberflächen steht die Verbesserung der Haftung im Vordergrund, bei Eisenoberflächen der Korrosionsschutz. Chrompigmente haben jedoch den Nachteil, daß sie krebserregend sind.

Es ist wünschenswert, Haftgrundierlacke herzustellen, die die oben genannten Nachteile nicht aufweisen und anwendbar sind, ohne daß sie eine Verfärbung des Decklackes bewirken, auch die Anwendung im thermisch härtenden Lackaufbau ermöglichen und zudem ohne Mitverwendung der krebserregenden Chromatpigmente anwendbar sind. Dies gelingt erfindungsgemäß durch Haftgrundierlacke auf Basis von in Lösemittel gelösten Polymeren sowie von Pigmenten, sauren Phosphorverbindungen und solchen Kunstharzen, die Äther von Epoxidharzen und/oder Ester von Epoxidharzen mit höchstens zweibasischen Carbonsäuren sind, wobei die Epoxidgruppen dieser Epoxidharze im allgemeinen zu über 80, vorzugsweise zu über 90 % umgesetzt sind.

Als Lösemittel dienen zweckmäßig niedrige Alkohole mit bis zu 4 C-Atomen, wie Methanol, Äthanol, Propanol, Isopropanol, n-Butanol, Isobutanol, die Ester dieser Alkohole mit Monocarbonsäuren, besonders mit Essigsäure; Glykoläther, wie Äthylenglykolmonomethyläther oder -monoäthyläther, Propylenglykolmonomethyläther oder -monoäthyläther oder deren Ester mit Monocarbonsäuren, besonders mit Essigsäure, Ketone wie Aceton, Methyläthylketon, Diäthylketon oder aromatische Kohlenwasserstoffe wie Toluol, Xylol, Äthylbenzol oder Mischungen dieser Lösemittel.

Als Polyvinylacetale eignen sich z.B. die des Form-, Acet-, Propion-, Butyr-, Isobutyr-, Valeraldehyds und höherer Aldehyde mit bis zu 10 C-Atomen, besonders aber Polyvinylbutyrale bzw. -isobutyrale unterschiedlicher Molekülgröße und unterschiedlichen Acetalisierungsgrades. Das Verhältnis zwischen Polyvinylacetal und Kunstharz liegt im allgemeinen zwischen 4 : 1 und 1 : 4, vorzugsweise zwischen 3 : 1 und 1 : 3.

Als Pigmente dienen z.B. Eisenoxidrot, Titandioxid vom Rutil- oder Anatas-Typ, Ruß, Zinkphosphat, Zinkoxid, Aluminium-Zink-Phosphate und andere mehr. Als übliche Zusatzstoffe kommen z.B. Füllstoffe bzw. Extender wie Talkum, Bariumsulfat, pyrogene Kieselsäure in Betracht.

Auf chromathaltige Pigmente kann ohne Beeinträchtigung der Haft- und Korrosionsschutzeigenschaften verzichtet werden. Gleichwohl ist es auch möglich, diese Pigmente zuzusetzen.

2

Als Phosphorverbindungen eignen sich z. B. die sauren Ester der verschiedenen Phosphorsäuren, saure Phosphate, vorzugsweise jedoch Orthophosphorsäure selbst. Diese werden im allgemeinen in Mengen von 1-30, vorzugsweise 1,5-20 %, bezogen auf Bindemittelanteil, d. h. Harz + Polyvinylacetal, zugegeben. Bei der Anwendung als Zweitopf-Haftgrundierlack, wie unten definiert, mit basischen Pigmenten is es zweckmäßig, den Phosphorsäureanteil nicht über 15 % zu steigern.

Geeignete Epoxydharzderivate sind vor allem solche, in denen die Epoxydgruppen zu Glykolderivaten umgesetzt sind, also Äther und Ester. Als Ätherkomponente kommen ein- und/oder zweiwertige Phenole, z. B. die unten genannten, und Furfurylalkohol in Betracht, als Esterkomponente höchstens zweibasische Carbonsäuren. Die Umsetzung mit den zugrundliegenden Epoxydharzen soll weitgehend erfolgen und der Restepoxydgehalt gering sein. Die Epoxydzahl der Derivate soll im allgemeinen 1,0, besser 0,5 nicht übersteigen.

Für die Herstellung der Derivate dienen vor allem Epoxydharze auf Basis von Diphenylolalkanen, besonders Diphenylolpropan und/oder -methan und Epihalogenhydrin, vorzugsweise Epichlorhydrin, mit Molekulargewichten von 200 bis 4 000, vorzugsweise 300 bis 2 000. Hieraus werden z. B. Phenoläther der Epoxydharze in üblicher Weise so hergestellt, daß das Epoxydharz mit einer den Epoxydgruppen mindestens äquivalenten Menge des Phenols in Gegenwart eines basischen Katalysators, z. B. Alkalihydroxid, tertiärem Amin oder Triphenylphosphan bei Temperaturen von Raumtemperatur bis 200 °C, vorzugsweise 120-180 °C, in der Schmelze oder in Lösung umgesetzt wird. Arbeitet man tertiären Aminen als Katalysator, können diese zugleich primäre und/oder sekundäre Aminofunktionen tragen, so daß der Katalysator mit in das Harz eingebaut wird. Es ist auch möglich, unter Anwendung der oben genannten Reaktionsbedingungen niedrig molekulare Epoxydharze, z. B. die Diglycidyläther von Diphenylolalkanen, mit Diphenylolalkanen und/oder Phenolen im Einstufenverfahren umzusetzen, wobei durch die Molverhältnisse zwischen den Komponenten die Molekülgröße der Endprodukte gesteuert werden kann. Für die Bildung der Äther mit Furfurylalkohol geht man zweckmäßig von fertigen Epoxidharzen aus und arbeitet sonst unter den gleichen Bedingungen wie mit Phenolen.

Die Herstellung der Epoxidharzester erfolgt in üblicher Weise, im allgemeinen bei 60-200 °C, vorzugsweise 100-170 °C durch Veresterung der oben genannten Epoxidharze mit Monocarbonsäuren und/oder Dicarbonsäuren, die auch olefinisch ungesättigt sein können, in Lösung oder Schmelze. Dabei ist es zweckmäßig, die Menge an Carbonsäuren nicht über die Menge hinaus zu steigern, die zur vollständigen Veresterung der Epoxyidgruppen notwendig ist. Für die Durchführung dieser Reaktion können, aber müssen nicht, die oben genannten Katalysatoren anwesend sein. Diese Epoxidharzester können a) aus relativ hochmolekularen oder, wie bei der Umsetzung mit Phenolen erwähnt wurde, niedrigmolekularen Epoxidharzen, z. B. den Diglycidyläthern von Diphenylolalkanen und gegebenenfalls zusätzlich Diphenylolalkanen und b) Carbonsäuren und/oder Carbonsäureglycidylestern hergestellt werden. Geht man von niedrigmolekularen Epoxydharzen aus, so müssen die oben genannten Katalysatoren anwesend sein.

Der Lack enthält vorteilhaft ein oder mehrere Verbindungen mit mindestens einer phenolischen OH-Gruppe z. B. in Mengen von 0,02 bis 4, vorzugsweise 0,05 bis 3,0 Gew.-%, bezogen auf den lösemittelfreien Bindemittelanteil, wodurch die Korrosionsbeständigkeit verbessert wird. Als Phenole können Mono- und/oder Polyhydroxybenzole, insbesondere einkernige und hiervon vor allem einwertige Phenole verwendet werden, wie die isomeren Kresole oder Äthylphenole oder die isomeren Alkylphenole mit 3-18 C-Atomen oder Resorcin, Hydrochinon, Brenzkatechin oder die isomeren Trihydroxybenzole. Besonders bevorzugt ist die Verwendung von Phenol (Hydroxybenzol). Bei der herstellung der Epoxidharz-Phenoläther unter Mitverwendung von einwertigen Phenolen können die Gewichtsverhältnisse so gewählt werden, daß sich der gewünschte Gehalt an freiem Phenol von selbst einstellt. Man kann jedoch die freien Phenole dem Harz auch nach Beendigung der Derivatbildung oder dem Lack zugeben. Es ist besonders überraschend, daß durch das freie Phenol keine Verfärbung des Decklackes eintritt.

Die Herstellung der Haftgrundierlacke selbst erfolgt zweckmäßig durch Lösen der Polymeren, des Kunstharzes und gegebenenfalls der Phenole in Lösemitteln und anschließendes Einarbeiten von Pigmenten und gegebenenfalls üblichen Zusatzstoffen. Vorzugsweise erfolgt die Einarbeitung der Pigmente in die Kunstharzlösung. Die Phosphorverbindung wird nach diesen Arbeitsgängen gegebenenfalls in Mischung mit einem Teil der Lackkomponenten, vorzugsweise mit den zur Verdünnung verwendeten Lösemitteln oder auch unmittelbar vor der Anwendung zu gegeben. In diesem Fall spricht man von einem Zwei-Topf-Haftgrundierlack.

Die zu schützenden Metalloberflächen, besonders die Oberflächen von Eisen, Chrom, Zink, Zinn oder Aluminium, werden im allgemeinen vor der Lackierung entfettet, ohne daß dieses zwingend erforderlich ist. Die Grundierung ist hervorragend korrosionsbeständig, hart, haftet sehr gut auf dem Untergrund und kann mit diesem verformt werden, ohne daß Schäden in ihr auftreten. Ferner sind die Grundierungen porenfrei schweißbar. Diese Eigenschaften stellen sich bereits kurze Zeit nach dem Auftrag bei Umgebungstemperatur ein.

Zum Überlackieren können alle üblichen Lacksysteme verwendet werden. Die Haftgrundierung schlägt nicht durch den Decklack durch. Als Decklacke kommen insbesondere Lacke auf Basis folgender Bindemittel in Frage : Oxydativ härtende Alkydharze, Nitrocellulose (NC) und NC-Kombinationen, mit Isocyanat vernetzende Acryl- und Polyesterharze, mit Polyaminen bzw. Polyamidoaminen vernetzende Epoxidharze und Vinylchlorid-Mischpolymerisate, z. B. die oben genannten, ferner als wärmehärtende

3

Bindemittel Polyester-, Alkyd- und Acrylharze in Kombination mit Harnstoff- und/oder Melaminharzen und selbstvernetzende Acrylharze. Jedoch ist für die Entwicklung der schützenden Eigenschaften des Haftgrundierlackes keine thermische Nachbehandlung notwendig. Sie ist aber möglich, wenn es die Natur des Decklackes erfordert. Auch in diesem Fall tritt kein Durchschlagen ein.

Im vorstehenden und den Beispielen sind Teile (T) Gewichtsteile und Prozente Gewichtsprozente.

## Beispiele

1) In einem Reaktionsgefäß, welches mit Rührer und Thermometer ausgestattet war, wurden 507 T des technischen Diglycidyläthers des 4,4'-Diphenylolpropans (Epoxydäquivalentgewicht 190, durchschnittliches Molekulargewicht 380, Viskosität 22 Pa · s/25 °C), 152 T 4,4'-Diphenylolpropan und 125 T Phenol geschmolzen, 0,24 T Dimethylaminopropylamin zugegeben und auf 140 °C erwärmt. Bei dieser Temperatur wurde 8 h gerührt. Dann wurde der Ansatz in 389 T n-Butanol, 195 T Isopropanol und 100 T Toluol gelöst. Die Ausbeute war quantitativ. Die Harzlösung hatte einen Festkörpergehalt von 60,5 % und eine Viskosität von 1 200 mPa · s/20 °C. Gehalt an freiem Phenol 0,59 %, Epoxid-Zahl 0,13.

2) In einer Apparatur, die mit Rührer, Thermometer und Rückflußkühler versehen war, wurden 264 T des Glycidylesters der Isononansäure, 304 T 4,4'-Diphenylolpropan und 253 T des Diglycidyläthers des 4,4'-Diphenylolpropans und 0,25 T Dimethylaminopropylamin auf 140 °C erhitzt und diese Temperatur 8 h gehalten. Dann wurden unter Abkühlen 350 T n-Butanol zugegeben. Die Ausbeute war quantitativ. Viskosität der 70 %igen Lösung 6 200 mPa · s/20 °C, Epoxid-Zahl 0,19.

### Lacktechnische Prüfungen

Mit den Harzen aus Beispiel 1 und 2 sowie drei Vergleichs-Lacksystemen nach dem Stand der Technik wurden lacktechnische Prüfungen durchgeführt. Das Polyvinylbutyral hatte einen Erweichungsbereich nach Ring- und Kugel-Methode (DIN ISO 4625) von 150-170 °C, eine Dichte von etwa 1,1, einen Gehalt an Butyralgruppen von 83-86 Äquivalent-%, an Acetatgruppen von etwa 3 Äquivalent-% und an Alkoholgruppen von 11-14 Äquivalent-%. Die Viskosität nach Höppler, DIN 53 015 lag in 10-%iger butanolischer Lösung bei 20 °C zwischen 90 und 150 mPa · s. Zu den Vergleichsversuchen wurden folgende Harze herangezogen :

I) durch Säurekatalyse härtbares Phenolharz, Viskosität nach DIN 53 177/20 °C 500-650 mPa · s, Rückstand nach DIN 53216 ca. 70 % ;

II) ein härtbares, nicht plastifiziertes Phenolharz, Viskosität nach DIN 53 177/20 °C 190-300 mPa · s, Rückstand nach DIN 53 216 ca. 70 % ;

III) mittelöliges, nichttrocknendes Alkydharz mit Phthalsäureanhydridanteil von 32 %, Viskosität nach DIN 53 177/20 °C 90-130 mPa · s, Säurezahl nach DIN 53 402 unter 10 und Rückstand nach DIN 53 216 von etwa 80 % ;

IV) nicht plastifiziertes Harnstoffharz, Viskosität nach DIN 53 177/20 °C, 1 000-1 200, Rückstand nach DIN 53 216 ca. 65 %.

Zum Vergleich III wurde eine Mischung aus 6,3 T des Harzes III und 7,7 T des Harzes IV verwendet.

| | A | B | C | D | E |
|---|---|---|---|---|---|
| | (Erfindung) | | (Vergleich) | | |
| Harz aus Beispiel 1 | 14,3 | – | – | – | – |
| Harz aus Beispiel 2 | – | 14,3 | – | – | – |
| Vergleich I | – | – | 14,3 | – | – |
| Vergleich II | – | – | – | 14,3 | – |
| Vergleich III | – | – | – | – | 14,0 |
| Polyvinylbutyral, 20%ig | 50 | 50 | 50 | 50 | 50 |
| Talkum IT extra | 10 | 10 | 10 | 10 | 10 |
| Eisenoxidrot 120 M | 6 | 6 | 6 | 6 | 6 |
| Zinkphosphat ZP 10 | 10 | 10 | 10 | 10 | 10 |
| Kieselsäure HDK-H 15/10% | 4 | 4 | 4 | 4 | 4 |
| Verdünnungsmittel | 30 | 30 | 30 | 30 | 30 |
| $H_3PO_4$/n-Butanol 1:2 | 4 | 4 | 4 | 4 | 4 |

Herstellung der Haftgrundierlacke

Die Pigmente uind Extender wurden mit den Kunstharzlösungen in einer schnellaufenden Rührwerksmühle auf eine Feinheit von ca. 10 μm zerkleinert. Danach gab man die Polyvinylbutyrallösung, Phosphorsäure/Butanol-Gemisch und das Verdünnungsmittel zu.

Auftrag

Die Haftgrundierlacke wurden bei einer Auslaufviskosität von ca. 20 DIN/s (DIN-Becher 4 mm, DIN 53 211) mit einer Spritzpistole mit Luftzerstäubung auf die Prüftafeln gespritzt. Die Trockenfilmstärke beträgt 30 bis 35 μm. Die Filme wurden sogleich auf ihre Trocknungsgeschwindigkeit geprüft; die anderen Prüfungen erfolgten nach 7 Tagen Lagerung bei Raumtemperatur. Die Bewertung der Filme erfolgte nach einer subjektiven Skala gemäß DIN 53 230, wobei die Bezeichnung O keine Veränderung, die Bezeichnung 5 den schlechtmöglichsten Wert bedeuten. Die Beständigkeit gegen Wassereinwirkung, der Salznebeltest sowie die Trockengeschwindigkeit wurden auf Eisenunterlage geprüft.

| Ergebnisse | A | B | C | D | E |
| | (Erfindung) | | (Vergleich) | | |
| --- | --- | --- | --- | --- | --- |
| Trocknung (DIN 53 150), Trockengrad 1 in min | 7 | 8 | 8 | 9 | 7 |
| Haftung (DIN 53 151) auf Eisen | | | | | |
| dito Aluminium | 0 | 0 | 2 | 3 | 2 |
| dito Zink | 0 | 0 | 2 | 3 | 2 |
| Wasserlagerung 72 h bei Raumtemperatur | 0 | 0 | 0 | 3 | 0 |
| Salznebeltest (DIN 53 167) 168 h: | | | | | |
| Blasenmenge (DIN 53 209) | 1 | 1 | 3 | 4 | 5 |
| Blasengröße (DIN 53 209) | 1 | 2 | 2 | 2 | 2 |
| Rost (DIN 52 210) | 1 | 1 | 2 | 2 | 2 |

Zur Bestimmung des Durchschlagens des Decklackes wurden die Eisen-Prüfbleche nach dreitägiger Lagerung mit einem bei Raumtemperatur vernetzenden und einem thermisch vernetzenden Decklack folgender Zusammensetzung spritzlackiert, wobei der hitzehäretende Decklack nach einer Ablüftzeit von 10 Minuten 30 Minuten bei 120 °C im Umlufttrockenschrank eingebrannt wurde.

| Bei Raumtemperatur vernetzender Decklack | Teile |
| --- | --- |
| Alkydharz, 55 %ig in Testbenzin (Lieferform)[1] | 60,0 |
| Titandioxid RN 59 | 28,0 |
| Ca-Octoat, 4 % Ca | 1,1 |
| Co-Octoat, 6 % Co | 0,2 |
| Pb-Octoat, 24 % Pb | 0,4 |
| Zr-Octoat, 6 % Zr | 0,8 |
| Xylol/Testbenzin 8:2 | 9,5 |

[1] Mittelöliges oxidativ trocknendes Alkydharz mit 45 % Ölgehalt und 27 % Phthalsäureanhydrid, bezogen auf 100 %iges Harz ; Viskosität 400-550 mPa · s/20 °C ; Säurezahl unter 10.

(Siehe Tabelle Seite 6 f.)

EP 0 152 793 B1

| Thermisch vernetzender Decklack | Teile |
|---|---|
| Alkydharz, 60 %ig in Xylol[2]) | 38,6 |
| Titandioxid RN 59 | 32,0 |
| Melaminharz, 55 %ig in Butanol/Xylol[3]) | 11,7 |
| Harnstoffharz, 65 %ig in Butanol[4]) | 7,4 |
| Essigester von Äthylenglykolmonoäthyläther | 1,0 |
| Xylol/Butanol 8 : 2 | 9,8 |
| | 100,0 |

[2]) Kurzöliges oxydativ trocknendes Alkydharz, Ölgehalt 42 %, Phthalsäureanhydridgehlt 40 %, bezogen auf 100 %iges Harz ; Viskosität 250-350 mPa · s/20 °C ; Säurezahl unter 25.

[3]) Nichtplastifiziertes, hochreaktives Melamin-Formaldehyd-Harz als 55 %ige Lösung in Isobutanol/Xylol ; Viskosität 390-520 mPa · s/20 °C.

[4]) Nichtplastifiziertes Harnstoffharz als 65 %ige Lösung in Butanol ; Viskosität 3 000-3 600 mPa · s/20 °C.

Die Decklacke wurden mit einer Trockenschichtdicke von 30 bis 35 µm auf die Haftgrundierung sowie zum Vergleich auf eine neutrale Glasplatte aufgetragen. Die Trockengeschwindigkeit wurde sofort geprüft. Nach 10 Tagen Lagerung bei 23 °C erfolgte die Beurteilung der relativen Gilbung im Vergleich zum Lackfilm auf der Glasplatte. Die Beurteilung der Vergilbung erfolgte zwei Studen nach dem Einbrennen.

| Ergebnisse: | A | B | C | D | E | Glas |
|---|---|---|---|---|---|---|
| | (Erfindung) | | (Vergleich) | | | |
| Oxidative Trocknung (Trockengrad 1) (DIN 53 150) | 2h | 2h | 2,5h | 4h | 2,5h | 2h |
| Durchschlagen | 0 | 0 | 3 | 4 | 0 | 0 |
| Thermische Trocknung | | | | | | |
| Durchschlagen | 0 | 0 | 4 | 4 | 0 | 0 |

**Patentansprüche**

1. Haftgrundierlacke auf Basis von in organischem Lösemittel gelösten Polyvinylacetalen sowie von Pigmenten, sauren Phosphorverbindungen, Kunstharzen und gegebenenfalls weiteren üblichen Zusatzstoffen, dadurch gekennzeichnet, daß sie als Kunstharze Äther von Epoxidharzen und oder Ester von Epoxidharzen mit höchstens zwei basischen Carbonsäuren enthalten, wobei die Epoxidgruppen dieser Epoxidharze zu über 80 %, vorzugsweise über 90 % umgesetzt sind.

2. Haftgrundierlacke gemäß Anspruch 1, dadurch gekennzeichnet, daß sie als Phosphorverbindung Orthophosphorsäure enthalten.

3. Haftgrundierlacke gemäß Anspruch 1 und/oder 2, dadurch gekennzeichnet, daß sie als Äther von Epoxidharzen solche mit ein- und/oder zweiwertigen Phenolen oder Furfurylalkohol enthalten.

4. Haftgrundierlacke gemäß einem oder mehrenren der Ansprüche 1 bis 3, dadurch gekennzeichnet, daß sie als Polyvinylacetal Polyvinylbutyral enthalten.

5. Haftgrundierlacke gemäß einem oder mehreren der Ansprüche 1 bis 4, dadurch gekennzeichnet, daß das Gewichtsverhältnis zwischen Polyvinylacetal und Kunstharz zwischen 4:1 und 1:4, vorzugsweise zwischen 3:1 und 1:3 liegt.

6. Haftgrundierlacke gemäß einem oder mehreren der Ansprüche 1 bis 5, dadurch gekennzeichnet, daß der Gehalt an sauren Phosphorverbindungen von 1-30, vorzugsweise 1,5 bis 20 Gew.-%, bezogen auf Bindemittelanteil, beträgt.

7. Haftgrundierlacke gemäß einem oder mehreren der Ansprüche 1 bis 6, dadurch gekennzeichnet, daß sie 0,02 bis 4, vorzugsweise 0,05 bis 3,0 Gew.-%, bezogen auf den lösemittelfreien Bindemittelanteil, mindestens einer Verbindung mit mindestens einer phenolischen OH-Gruppe, vorzugsweise Phenol enthalten.

8. Verwendung der Haftgrundierlacke gemäß einem oder mehreren der Ansprüche 1 bis 7 zum Grundieren von Metalloberflächen, besonders bon Eisen, Zink und Aluminium.

6

## Claims

1. A wash primer based on polyvinyl acetals dissolved in organic solvents and on pigments, acid phosphorus compounds, synthethic resins and, if desired, other customary additives, which comprises, as the synthetic resins, ethers of epoxy resins and/or esters of epoxy resins with at most dibasic carboxylic acids, over 80 %, preferably over 90 %, of the epoxide groups of these epoxy resins having reacted.

2. The wash primer as claimed in claim 1, which comprises orthophosphoric acid as the phosphorus compound.

3. The wash primer as claimed in claims 1 and/or 2, which comprises ethers of epoxy resins with monohydric and/or dihydric phenols or furfuryl alcohol as the ethers of epoxy resins.

4. The wash primer as claimed in one or more of claims 1 to 3, which comprises polyvinyl butyral as the polyvinyl acetal.

5. The wash primer as claimed in one or more of claims 1 to 4, wherein the weight ratio between polyvinyl acetal and synthetic resin is between 4:1 and 1:4, preferably.between 3:1 and 1:3.

6. The wash primer as claimed in one or more of claims 1 to 5, wherein the content of acid phosphorus compounds is 1-30, preferably 1.5 to 20 % by weight, based on the amount of binder.

7. The wash primer as claimed in one or more of claims 1 to 6, which comprises 0.02 to 4, preferably 0.05 to 3.0 % by weight, based on the amount of solvent-free binder, of at least one compound having at least one phenolic OH group, preferably phenol.

8. Use of the wash primer as claimed in one or more of claims 1 to 7 for priming metal surfaces, especially ferrous, zinc and aluminium surfaces.

## Revendications

1. Peintures primaires à base de polyvinylacétals dissous dans un solvant organique, ainsi que de pigments, de composés acides du phosphore, de résines synthétiques et éventuellement d'autres additifs habituels, caractérisées en ce qu'elles contiennent en tant que résines synthétiques des éthers de résines époxydes et/ou des esters de résines époxydes avec des acides au plus dicarboxyliques, le taux de conversion des groupes époxydes de ces résines époxydes étant supérieur à 80 %, de préférence supérieur à 90 %.

2. Peintures primaires selon la revendication 1, caractérisées en ce qu'elles contiennent en tant que composé du phosphore de l'acide orthophosphorique.

3. Peintures primaires selon la revendication 1 et/ou 2, caractérisées en ce qu'elles contiennent comme éthers de résines époxydes ceux obtenus avec des mono- et/ou biphénols ou de l'alcool furfurylique.

4. Peintures primaires selon l'une ou plusieurs des revendications 1 à 3, caractérisées en ce qu'elles contiennent comme polyvinylacétal du polyvinylbutyral.

5. Peintures primaires selon l'une ou plusieurs des revendications 1 à 4, caractérisées en ce que le rapport en poids du polyvinylacétal à la résine synthétique est compris entre 4:1 et 1:4, de préférence entre 3:1 et 1:3.

6. Peintures primaires selon l'une ou plusieurs des revendications 1 à 5, caractérisées en ce que la teneur en composés acides du phosphore est de 1 à 30, de préférence de 1,5 à 20 % en poids par rapport à la partie liant.

7. Peintures primaires selon l'une ou plusieurs des revendications 1 à 6, caractérisées en ce qu'elles contiennent de 0,02 à 4, de préférence de 0,05 à 3,0 % en poids, par rapport à la partie liant exempt de solvant, au moins un composé comportant au moins un groupe OH phénolique, de préférence le phénol.

8. Utilisation des peintures primaires selon l'une ou plusieurs des revendications 1 à 7, pour appliquer une couche de fond sur des surfaces métalliques, en particulier en fer, en zinc et en aluminium.